# EUROPEAN PATENT APPLICATION

(11) **EP 2 293 233 A1**
(43) Date of publication of application: **09.03.2011**
(21) Application number: 10174766.5
(22) Date of filing: 31.08.2010
(51) Int. Cl.: G06Q 30/00

(54) **Cross-platform targeted advertisements**

(30) Priority: 03.09.2009 US 553125
(71) Applicant: Disney Enterprises, Inc., Burbank, CA 91521-0165 (US)
(72) Inventor: Christianson, Ryan, Lynnwood WA 98037 (US); Kehle, John, Kirkland WA 98034 (US); Dietz, John, Redmond WA 98052 (US); Steen, Henrik, Kirkland WA 98034 (US); Young, James, Marysville WA 98270 (US)
(74) Representative: Dilg, Haeusler, Schindelmann Patentanwaltsgesellschaft mbH

(57) **Abstract**

Various embodiments of systems, methods, computer devices, and computer software are disclosed for implementing cross-platform targeted advertisements. One embodiment is a method for providing a targeted advertisement. One such method comprises: accessing one of a web site and a mobile site in an initial session; collecting information related to a user in the initial session; storing the collected information; accessing the other of the web site and the mobile site in a subsequent session; determining the user for the subsequent session based on the stored information; selecting a targeted advertisement for the subsequent session based on the stored information; and providing the targeted advertisement to the user in the subsequent session.

## Description

### BACKGROUND

Advertising is a key driver for online business models. Online publishers and other content providers, web application providers, and many other web sites heavily rely on advertising revenues to sustain their businesses. There are a number of common models for purchasing online advertising. The most common ways in which online advertising are purchased are cost per impression (CPM), cost per click (CPC), cost per view (CPV), and cost per action (CPA). CPM involves advertisers paying for exposure of their message to a specific audience. CPM costs are typically priced per thousand impressions. CPV involves advertisers paying for the delivery of a targeted visitor to the advertisers website. CPC, also known as pay per click (PPC) involves advertisers paying every time a user clicks on their listing and is redirected to their website. They do not actually pay for the listing, but only when the listing is clicked on. This system allows advertising specialists to refine searches and gain information about their market. Under the PPC pricing system, advertisers pay for the right to be listed under a series of target keywords that direct relevant traffic to their website, and pay only when someone clicks on their listing which links directly to their website. CPC differs from CPV in that each click is paid for regardless of whether the user makes it to the target site.

CPA advertising is performance based and is common in the affiliate marketing sector of the business. In this payment scheme, the publisher takes all the risk of running the ad, and the advertiser pays only for the amount of users who complete a transaction, such as a purchase or sign-up. This model is popular for banner advertisements. Cost per lead (CPL) advertising is similar to CPA advertising and is based on the user completing a form, registering for a newsletter or some other action that the merchant feels will lead to a sale. Also common, cost per order (CPO) advertising is based on each time an order is transacted.

Regardless of the advertising model or purchasing method, it is of particular importance to advertisers to place online ads with web sites that are closely matched to their target customers. Therefore, many web sites employ ad servers to assist in implementing targeted advertisements. An ad server is a computer server that stores advertisements and delivers them to website visitors. Ad servers come in two forms: local ad servers and third party or remote ad servers. Local ad servers are typically run by a single publisher and serve ads to that publisher's domains, allowing fine-grained creative formatting, and content control by that publisher. Remote ad servers can serve ads across domains owned by multiple publishers. They deliver the ads from one central source so that advertisers and publishers can track the distribution of their online advertisements, and have one location for controlling the rotation and distribution of their advertisements across the web.

Despite the success and popularity of online advertising systems and methods, there remains a need in the industry for improved systems, methods, computing devices, and computer software for providing online targeted advertisements.

### SUMMARY

Various embodiments of systems, methods, computer devices, and computer software are disclosed for implementing cross-platform targeted advertisements. One embodiment is a method for providing a targeted advertisement. One such method comprises: accessing one of a web site and a mobile site in an initial session; collecting information related to a user in the initial session; storing the collected information; accessing the other of the web site and the mobile site in a subsequent session; determining the user for the subsequent session based on the stored information; selecting a targeted advertisement for the subsequent session based on the stored information; and providing the targeted advertisement to the user in the subsequent session.

Another embodiment is a system for providing targeted advertisements to users across a primary platform and a secondary platform. One such system comprises a server and a cross-platform targeted advertisement system being executed by the server. The cross-platform targeted advertisement system comprises logic configured to: provide a user access to a web site via one of a primary platform and a secondary platform in an initial session; collect information related to the user in the initial session; store the collected information; provide the user access to the the web site via the other of the primary platform and the secondary platform; and serve a targeted advertisement to the user for the subsequent session based on the stored information.

### BRIEF DESCRIPTION OF THE DRAWINGS

FIG. 1 is a block diagram illustrating an embodiment of a system for providing cross-platform targeted advertisements.

FIG. 2 is a flow chart illustrating an embodiment of a method for providing a cross-platform targeted advertisement via the system of FIG. 1.

FIG. 3 is a combined block/flow diagram illustrating an embodiment of method for collecting user-related information via the system of FIG. 1.

FIG. 4 is a combined block/flow diagram illustrating another embodiment of a method for providing cross-platform targeted advertisements.

FIG. 5 is a combined block/flow diagram illustrating yet another embodiment of a method for providing cross-platform targeted advertisements.

### DETAILED DESCRIPTION

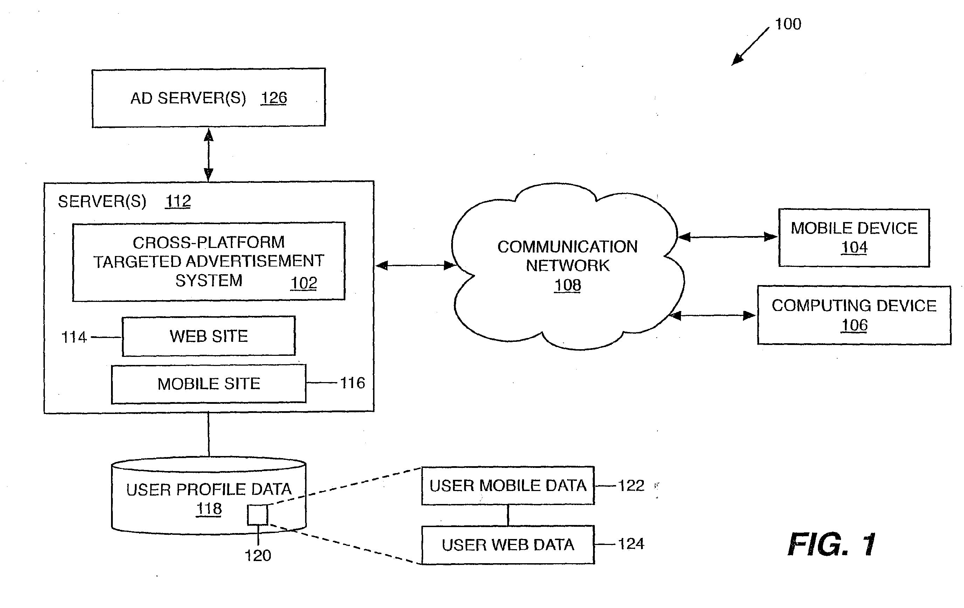

Various embodiments of systems, methods, computing devices, and computer software for implementing cross-platform targeted advertisements are disclosed. As mentioned above and described below in more detail with reference to FIGS. 1 - 5, the cross-platform targeted advertisement systems and methods enable targeted advertisements to be served to users across different platforms (*e.g*., a primary platform and a secondary platform) based on information collected via either platform. In an embodiment, the primary platform may comprise an online platform, and the secondary platform may comprise a mobile platform, although it should be appreciated that the cross-platform targeted advertisement systems and methods may be implemented across two or more platforms of any kind. A centralized system is used to collect and store a variety of types of desirable user-related data (*e.g*., user preference data, account information, location-based information, etc.). The user-related data may be collected via either the primary platform (*e.g*., online platform) or the secondary platform (*e.g*., mobile platform). A mobile platform refers to any communication system for delivering content and/or an application to a mobile communication device (*e.g*., a mobile phone) via a mobile carrier network or other communication network. The mobile platform may be performance limited relative to the online platform due to, for example, limitations of the mobile communication device or the associated network, such as limited display size or processing power of the mobile communication device or bandwidth of the associated network. An online platform refers to any communication system for delivering content and/or an application to a communication device via the Internet or the World Wide Web.

In operation, the user-related data may be provided by the user during a session with a site associated with either the primary or the secondary platform. In other embodiments, the user-related data may be automatically captured during the session. The user-related data is stored in the centralized system and used to serve targeted advertisements to the user when the user subsequently accesses a site associated with the primary or secondary platform. For example, in one general-use scenario, the user-related data may be collected during a session with a mobile site and stored in the centralized system. In this embodiment, the user-related data may comprise, for instance, the user's mobile phone number, the user's geographic location, mobile browsing history, application preferences, user interests, or any other desirable data. Furthermore, it should be appreciated that the mobile site may comprise a Short Message Service (SMS) application, a Wireless Application Protocol (WAP) site, or any other content site or application provided to the user via a mobile platform. When the user subsequently accesses a related or associated web site, the user-related data collected during the mobile session may subsequently be used to determine and serve a targeted advertisement to the user during the online session with the web site. In the other general use scenario, the user-related data is collected from the web site, and subsequently used to serve targeted advertisements to the user via any of the mobile services described above. In this manner, the centralized system provides an integrated solution to targeted advertisement by enabling advertisers to use a single system for both mobile advertising campaigns and traditional online advertising campaigns. Furthermore, the centralized system may use data from the mobile session to specify, configure, or otherwise inform the targeted advertisements via the web site (and vice versa).

FIG. 1 illustrates an embodiment of a system 100 for implementing cross-platform targeted advertisements. The system 100 comprises a cross-platform targeted advertisement system 102 operatively coupled to one or more servers supporting a web site 114 and a related or associated mobile site 116. The server(s) 112 (*e.g*., web servers, carrier servers, etc.) are configured to interface with a mobile platform and an online platform. In this regard, the server(s) 112 may be configured to communicate with mobile devices 104 and communication devices 106 via a communication network 108 (*e.g*., a carrier network and/or a data network, such as the Internet or the World Wide Web (WWW)). Mobile devices 104 may comprise a mobile phone, a portable computing device, or any other wireless computing device configured to communicate with the carrier network 108. Computing devices 106 may comprise a personal computer, a laptop, or any other Internet-enabled device configured to communicate via the Internet 110. It should be appreciated that a single device (*e.g*., a smart phone) may be configured to support both forms of communication and, therefore, may operate as both a mobile device 104 and a computing device 106. Thus, the terms mobile device and computing device are not intended to be limited to particular end-user devices or hardware and software configurations. Rather, these terms refer to whether the particular device is accessing the mobile site 116 (e.g., via the secondary platform) or the web site 114 (e.g, via the primary platform). Furthermore, it should be appreciated that the terms "user" and "device" or "client device" may be used interchangeably.

The cross-platform targeted advertisement system 102 comprises the processor-executable logic for managing the provision of a cross-platform targeted advertisement. In this regard and as described below in more detail, the cross-platform targeted advertisement system 102 generally comprises logic configured to (1) collect and store user-related data from user sessions with the web site 114 and/or the mobile site 116 and (2) facilitate database look-ups to serve targeted advertisements based on the user-related data. The user-related data may be stored in a database 118 as a user profile 120 comprising user mobile data 122 and user web data 124. As further illustrated in FIG. 1, the system 100 may comprise one or more ad servers 126. The ad server(s) 126 store and serve advertisements to the users accessing the web site 114 and the mobile application 116 based on the user profiles 120. It should be appreciated that the functionality of the ad server(s) 126 may be integrated with the server(s) 112, and the database 118 may maintained by either server(s) 112 or 126. In some embodiments, the ad server(s) 126 and/or the cross-platform targeted advertisement system 102 may be remotely located from the server(s) 112 with suitably-configured interfaces to operatively couple the respective system components.

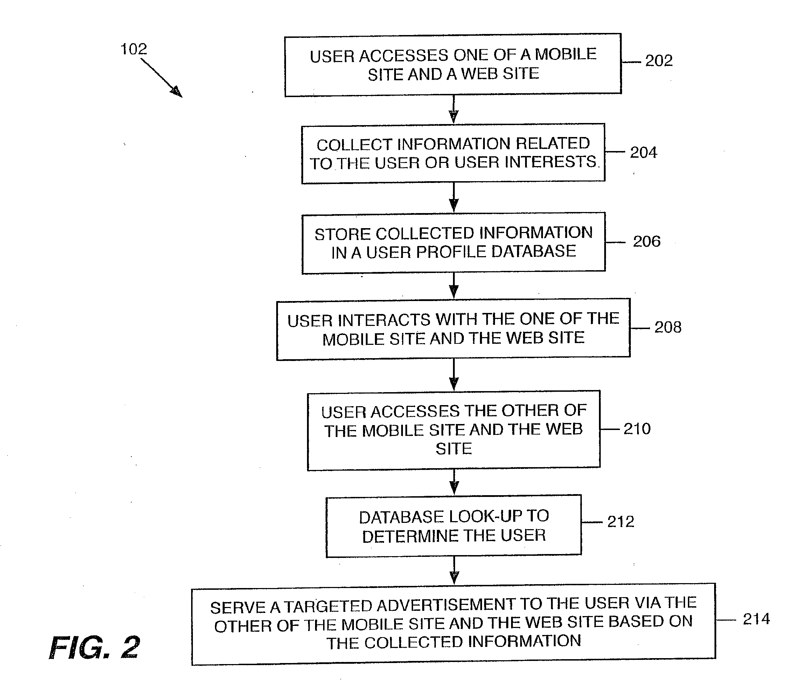

Having described the general components of an exemplary system 100 for implementing cross-platform targeted advertisements, the architecture, operation and/or functionality of various embodiments of the cross-platform targeted advertisement system 102 will be described with reference to FIGS. 2 - 5. It should be appreciated that the cross-platform targeted advertisement system 102 comprises the logic for providing the various features and functions described above and below. The cross-platform targeted advertisement system 102 may be implemented in software, hardware, firmware, or a combination thereof. In one embodiment, the systems are implemented in software or firmware that is stored in a memory or storage device and that is executed by a suitable instruction execution system. In software or firmware embodiments, the logic may be written in any suitable computer language. Portions of the logic may reside on mobile device 104, computing device 106, server(s) 112, or ad server(s) 126. In hardware embodiments, the systems may be implemented with any or a combination of the following, or other, technologies, which are all well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

One of ordinary skill in the art will appreciate that any process or method descriptions associated with the operation of the cross-platform targeted advertisement system 102, including those illustrated in the flow charts of FIGS. 2 - 5, may represent modules, segments, logic or portions of code which include one or more executable instructions for implementing logical functions or steps in the process. It should be further appreciated that any logical functions may be executed out of order from that described, including substantially concurrently or in reverse order, depending on the functionality involved, as would be understood by those reasonably skilled in the art.

Furthermore, the cross-platform targeted advertisement system 102 may be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical or electronic connection, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

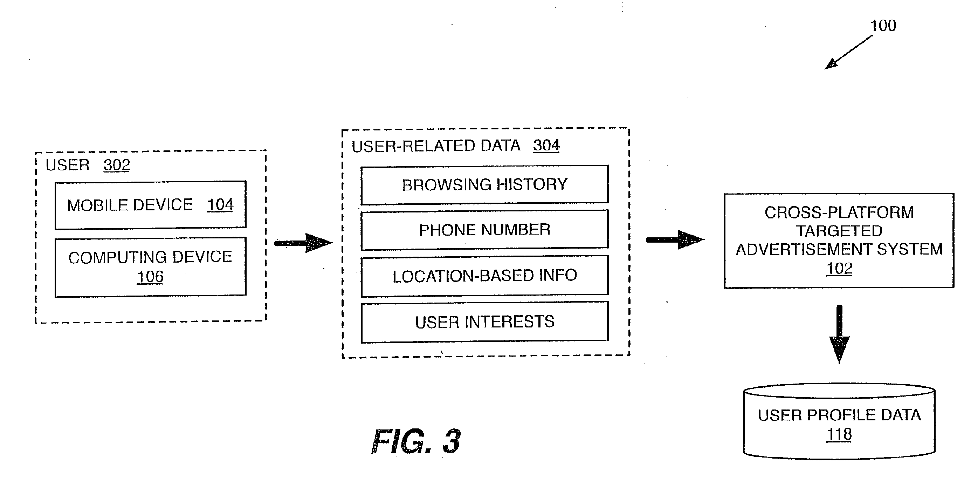

FIG. 2 illustrates the architecture, operation, and/or functionality of one of a number of possible embodiments of the cross-platform targeted advertisement system 102. At block 202, a user 302 (FIG. 3) accesses either the mobile site 116 via a mobile device 104 or the web site 114 via the computing device 106. The mobile site 116 may comprise, for example, a WAP site, an SMS application, or any combination of content and/or functionality accessible via the mobile device 104. The web site 114 may comprise any combination of content and/or functionality. The mobile site 116 and the web site 114 may be accessible by a browser located on the device or any combination of client and/or server functionality.

At block 204, user-related data 304 (FIG. 3) is collected during an initial session with the mobile site 116 or the web site 114. It should be appreciated that, depending on whether the mobile site 116 or the web site 114 is being accessed by the client device, different types of information may be collected. As mentioned above, the information may be provided by the user or automatically collected. At block 206, the collected information is stored in the database 118. In the embodiment illustrated in FIG. 3, the user-related data 304 comprises one or more of the following: the user's browsing history; the user's mobile phone number (or other account information); location-based information; user interests; geo-locational information; type and model of the mobile device 104 or computing device 106; carrier information; or any other desired information. The cross-platform targeted advertisement system 102 may implement a cookie mechanism with a browser located on the mobile device 104 and/or the computing device 106. The cookie mechanism, or other tracking mechanisms, may be used to track user behavior within the system. The cross-platform targeted advertisement system 102 stores the collected information in the database 118. Before, during, and/or after collecting the information, at block 208, the user 302 may interact with the web site 114 or the mobile site 116.

At block 210, the user 302 accesses either the mobile site 116 or the web site 114 in a subsequent session. Having already collected and stored the user-related data 304 from the previous session, at block 212, the cross-platform targeted advertisement system 102 performs a database look-up of the user-related data in the database 118. Based on the user-related data 302, the cross-platform targeted advertisement system 102 determines the user 302 and, at block 214, identifies and serves a targeted advertisement to the user 302. As mentioned above, the selection and delivery of the targeted advertisement may be implemented by any combination of the server(s) 112 and the ad server(s) 126. One of the key aspects is that the targeted advertisement served to one of the mobile site 116 and the web site 114 in the subsequent session is selected based at least partially on the user-related data 304 collected during the initial session with the mobile site 116 or the web site 114 (block 206). In this manner, the cross-platform targeted advertisement system 102 provides targeted advertisements across the respective mobile and online platforms (i.e., primary and secondary platforms), in which data may be combined between the platforms to present targeted advertisements in both platforms.

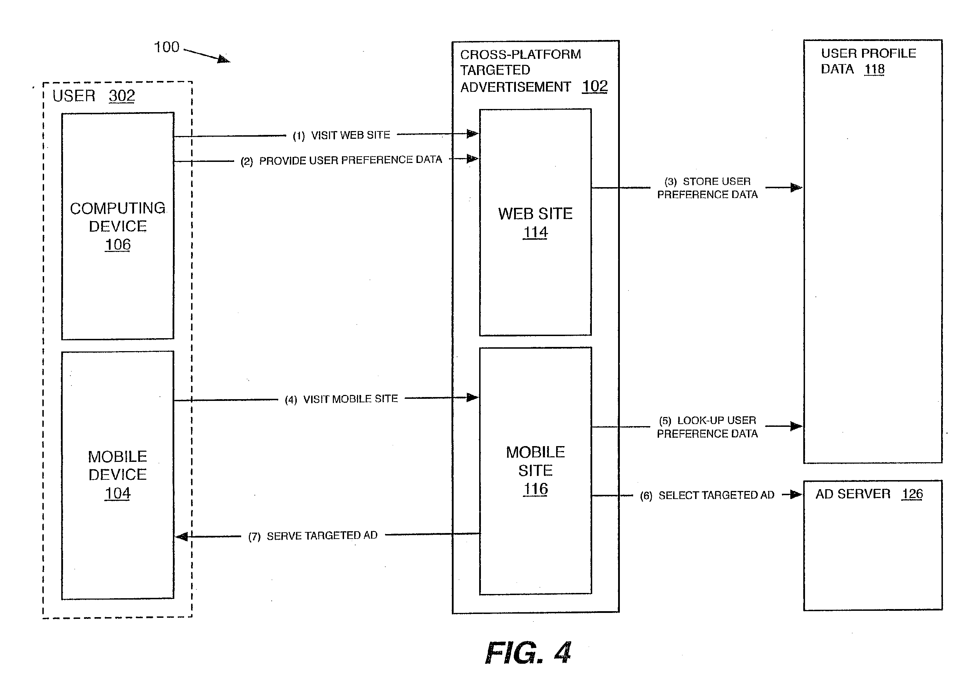

FIG. 4 illustrates another embodiment of a method for implementing a cross-platform targeted advertisement via the exemplary system 100 of FIG. 1. In this embodiment, the initial session during which user preference data is collected is with the web site 114, although in alternative embodiments the initial session may be with the mobile site 116. The web site 114 and the mobile site 116 are related to a particular or related topic of interest (*e.g*., sports). As illustrated in FIG. 4, the user 302 may visit the web site 114 and provide certain user preference data. The user preference data may specify which types of sports the user 302 prefers, particular teams of interest, etc. The cross-platform targeted advertisement system 102 stores the user preference data in the database 118. At a later time or in a separate session, the user 302 may access the related or associated mobile site 116. The cross-platform targeted advertisement system 102 may identify the user 302 and then perform a database look-up. Based on the user preference data (which may be passed to the ad server 126), the ad server 126 selects a targeted advertisement that is served to the user 302 via the mobile site 116.

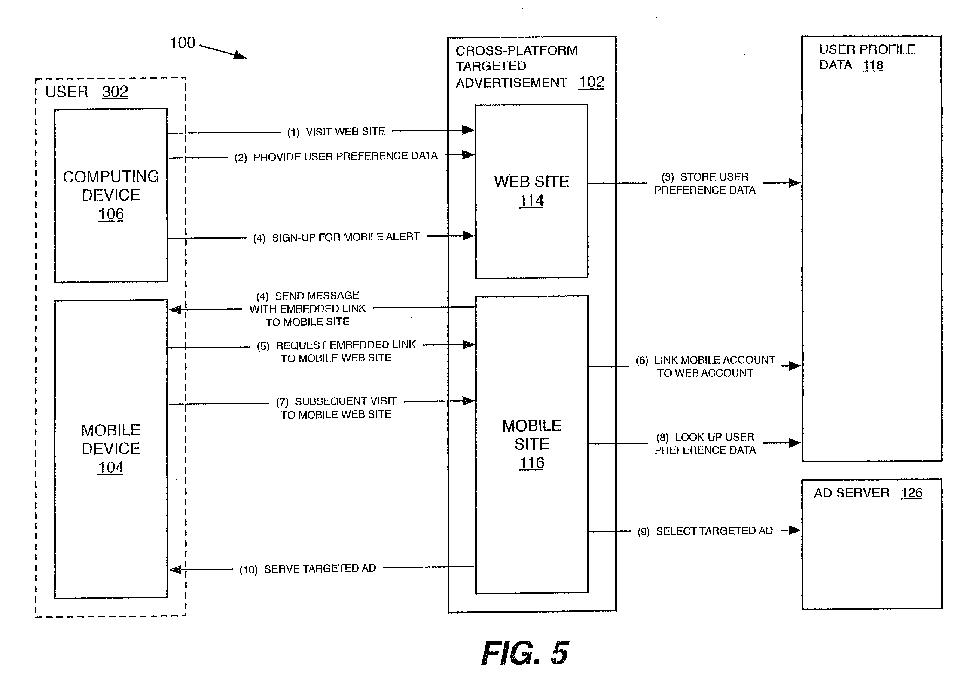

FIG. 5 illustrates another embodiment of a method for implementing a cross-platform targeted advertisement. In this embodiment, the user 302 visits the web site 114 and provides (either actively or passively) user preference data, as described above, and the data is stored in the database 118. The user preference data may be associated with a web account (*e.g*., user web data 124 - FIG. 1). During the session with the web site 114, the user 302 may also sign-up for a mobile alert service. The user 302 may specify the types of alerts to receive via the service. The cross-platform targeted advertisement system 102 may create a mobile account specifying the parameters of the mobile alert service and account information, such as, the user's mobile phone number (*e.g*., user mobile data 122 - FIG. 1). To validate the mobile alert service, a message may be sent to the user's mobile phone. The message may include an embedded link directing the user 302 to a URL for the mobile site 116. When the user 302 follows the link, the mobile account may be validated and the mobile account linked to the web account.

In an embodiment, the user 302 may provide an account ID from the mobile platform to the online platform or vice versa. The cross-platform targeted advertisement system 102 may provide a unique ID to the user's mobile phone and prompt the user 302 to enter that unique ID on the mobile web site 116. This may be done manually, for example, as a text message, or the user 302 may be provided a web link. In other embodiments, the unique ID may be provided in a passive manner. In another embodiment, the user 302 may be sent an email including a link containing the mobile user ID. The cross-platform targeted advertisement system 102 may enforce a login procedure, which forces the user 302 to login when they click the link in the email. The login procedure may be implemented using any suitable authentication technique.

At a later time or in a separate session, the user 302 may access the related mobile site 116. The cross-platform targeted advertisement system 102 identifies the user 302 and then performs a database look-up. The user 302 may be identified by the linking mechanisms described above, or by other desirable techniques. As described above, based on the user preference data, the ad server 126 selects a targeted advertisement that is served to the user 302 via the mobile site 116. Furthermore, in a subsequent visit to the web site 114, the cross-platform targeted advertisement system 102 may serve a targeted advertisement using mobile information.

It should be noted that this disclosure has been presented with reference to one or more exemplary or described embodiments for the purpose of demonstrating the principles and concepts of the invention. The invention is not limited to these embodiments. As will be understood by persons skilled in the art, in view of the description provided herein, many variations may be made to the embodiments described herein and all such variations are within the scope of the invention.

## Claims

1. A method for providing a targeted advertisement, the method comprising:
accessing one of a web site and a mobile site in an initial session;
collecting information related to a user in the initial session;
storing the collected information;
accessing the other of the web site and the mobile site in a subsequent session;
determining the user for the subsequent session based on the stored information;
selecting a targeted advertisement for the subsequent session based on the stored information; and
providing the targeted advertisement to the user in the subsequent session.

2. The method of claim 1, wherein the initial session involves the mobile site and the collecting information related to the user comprises receiving the user's location.

3. The method of claim 2, wherein the user's location is provided by a mobile carrier.

4. The method of anyone of the claims 1 to 3, wherein the mobile site comprises a mobile alert application.

5. The method of anyone of the claims 1 to 4, wherein the collecting information in the initial session comprises at least one of the following:
capturing the user's browsing history;
receiving the user's telephone number;
receiving location-based information; and
receiving user preference data.

6. A system for providing targeted advertisements to users across a primary platform and a secondary platform, the system comprising:
a server; and
a cross-platform targeted advertisement system being executed by the server and comprising logic configured to:
provide a user access to a web site via one of a primary platform and a secondary platform in an initial session;
collect information related to the user in the initial session;
store the collected information;
provide the user access to the the web site via the other of the primary platform and the secondary platform; and
serve a targeted advertisement to the user for the subsequent session based on the stored information.

7. The system of claim 6, wherein the primary platform comprises an online platform and the secondary platform comprises a mobile platform.

8. The system of claim 6 or 7, wherein the initial session involves a mobile site accessed via the secondary platform and the collecting information related to the user comprises: receiving the user's location.

9. The system of claim 8, wherein the user's location is provided by a mobile carrier.

10. The system of claim 8 or 9, wherein the mobile site comprises a mobile alert application.

11. The system of anyone of the claims 6 to 10, wherein the collected information in the initial session comprises at least one of the following:
capturing the user's browsing history;
receiving the user's telephone number;
receiving location-based information; and
receiving user preference data.
